(19) Europäisches Patentamt
European Patent Office
Office européen des brevets

(11) **EP 3 400 575 B1**

(12) **EUROPÄISCHE PATENTSCHRIFT**

(45) Veröffentlichungstag und Bekanntmachung des Hinweises auf die Patenterteilung:
**06.05.2020   Patentblatt 2020/19**

(21) Anmeldenummer: **16784812.6**

(22) Anmeldetag: **11.10.2016**

(51) Int Cl.:
*G06T 5/00* (2006.01)      *G06T 5/40* (2006.01)

(86) Internationale Anmeldenummer:
**PCT/EP2016/074255**

(87) Internationale Veröffentlichungsnummer:
**WO 2017/076581 (11.05.2017 Gazette 2017/19)**

(54) **ERFINDUNG BETREFFEND VERFAHREN ZUR BLENDENEINSTELLUNG**

INVENTION RELATING TO A METHOD FOR DIAPHRAGM ADJUSTMENT

PROCÉDÉ DE RÉGLAGE DE DIAPHRAGME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015   DE 102015119137**

(43) Veröffentlichungstag der Anmeldung:
**14.11.2018   Patentblatt 2018/46**

(73) Patentinhaber: **Hochschule Rheinmain University of Applied Sciences Wiesbaden Rüsselsheim 65197 Wiesbaden (DE)**

(72) Erfinder:
• **CHRISTMANN, Mike**
**56357 Lierschied (DE)**
• **LENZEN, Lucien**
**35037 Marburg (DE)**

(74) Vertreter: **Stumpf, Peter c/o TransMIT GmbH Kerkrader Strasse 3 35394 Gießen (DE)**

(56) Entgegenhaltungen:
US-A- 4 999 711      US-A- 5 724 456
US-A1- 2009 027 545      US-B1- 7 809 188

## Beschreibung

Die vorliegende Erfindung betrifft ein Verfahren zur Blendenstellung zur Reduzierung des wiedergegebenen Helligkeitsbereiches eines Bildes oder einer Sequenz von Bildern im Vergleich zu den aufgenommenen Helligkeitsbereichen des entsprechenden Bildes oder der Sequenz von Bildern.

## Allgemeines Gebiet der Erfindung

Eine Blende ist eine (normalerweise mechanische) Vorrichtung an Kameras, mit deren Hilfe der Lichtdurchlass durch das optische System (Objektiv) verändert werden kann. Sie ermöglicht das Helligkeitsspektrum einer Aufnahme zu begrenzen und verhindert, dass bestimmte Bereiche einer Aufnahme unter- oder überbelichtet werden.

Die Blende bewirkt dabei, dass aus dem Bildsignal des realen Bildes mit einem bestimmten Spektrum von Helligkeitswerten, bestimmte definierte Helligkeitsbereiche entfernt werden (z.B. besonders helle oder besonders dunkle Bereiche). Eine Blende muss in diesem Sinne nicht zwingend ein physisches Bauteil einer Kamera sein. Im Falle von digital aufgenommene Bildern oder Sequenzen von Bildern ist es möglich unabhängig von der physischen Blende innerhalb des optischen Systems den Helligkeitsbereich der aufgenommenen Bilder oder der Sequenzen von Bildern vor einer Wiedergabe über Bildbearbeitungsalgorithmen weiter zu reduzieren. Dies wird auch als clipping bezeichnet.

Ein wichtiger Begriff hierbei ist Dynamik- bzw. Kontrastumfang.

Dynamikumfang, auch Dynamikbereich oder einfach nur Dynamik oder Kontrastumfang, bezeichnet in allgemeinen technischen, physikalischen oder mathematischen Zusammenhängen den Quotienten aus Maximum und Minimum einer physikalischen Größe oder Funktion. Üblicherweise werden zur Darstellung die Hilfsmaßeinheiten B (Bel) oder auch Np (Neper) verwendet. Sowohl bei bewegten Bildern in Film und Video als auch in der Fotografie bezeichnet der Dynamikbereich den Quotienten aus größtem und kleinstem von Rauschen bzw. Körnung unterscheidbaren Helligkeitswert. Der Quotient wird üblicherweise im 2er-Logarithmus als Blendenstufen angegeben.

Eine Blendeneinstellung ist die Festlegung welche Bereiche der Heiligkeitsverteilung des realen Bildes für die Wiedergabe relevant sind. Bei der physischen Blende wird das durch Festlegung der Blendenöffnung und der Belichtungszeit erreicht.

## Stand der Technik

Das Thema Blendeneinstellung gewinnt immer stärker an Bedeutung, weil Bildsignale heutzutage zwar mit hohem Dynamikumfang (HDR = High Dynamic Range) aufgenommen werden können, aber der Dynamikumfang von Anzeigeelementen wie z.B. Displays wesentlich geringer ist (SDR = Standard Dynamic Range). Um zumindest den visuellen Eindruck eines hohen Dynamikumfangs zu erreichen gibt es verschiedene Lösungen.

Stand der Technik sind sogenannte Tone Mapping Operatoren (TMO). Hier wird durch eine lokale oder globale Übertragungsfunktion der visuelle Eindruck auch in die durch Displays dargestellten Bildsignale übertragen. TMOs versuchen die Charakteristika der menschlichen Wahrnehmung nachzubilden. So steht häufig das Verhalten der Fotorezeptoren im Vordergrund, welche einen näherungsweise logarithmischen Zusammenhang zwischen Luminanz (tatsächlicher Helligkeit) und empfundener Helligkeit aufweisen. Sie werden in zwei große Klassen unterteilt:

- Die Globalen Verfahren, bei denen jedes Pixel mit derselben Übertragungskurve gewichtet wird. Diese basiert meist auf der mittleren Helligkeit (Luminanz) des Gesamtbildes.
- Und die Lokalen Verfahren, welche versuchen den regionalen Kontrast zu erhalten, indem sie die Umgebung jedes Pixels mit berücksichtigen.

Die Kontrastkompression von TMOs basiert auf einer Intraframe-Analyse. Dabei werden die Helligkeitsinformationen eines einzelnen Bildes herangezogen, um eine Anpassung an einen geringeren Dynamikbereich durchzuführen. Kleine Schwankungen der Werte von einem Bild zum nächsten reichen bei lokalen Verfahren bereits aus, dass der TMO zu einem signifikant anderen Ergebnis kommt.

Die Folge ist ein unangenehmes großflächiges Flackern oder auch Pulsieren der Helligkeit.

Alternativ können globale Operatoren verwendet werden, bei denen eine Kurve auf alle Pixel angewendet wird. Diese einheitliche Behandlung kann bei sehr großen Dynamikumfängen aber zu einem flauen Endergebnis führen, welches subjektiv schlechter empfunden wird, als jenes einer Kamerakennlinie mit starken über- oder unterbelichteten Partien.

Die Umwandlung ist bei beiden an sich grundsätzlich in Echtzeit möglich. Problematisch ist hier aber die Zuverlässigkeit bei den lokalen Operatoren, da die Übertragungsfunktion von HDR in SDR sich lokal sehr schnell ändern kann. So können schon kleine Änderungen in der Helligkeit bzw. der Helligkeitsverteilung des Ausgangssignals zu Bildfehlern (z.B. Flackern, Halo) führen. Dies kann auch bei Szenenwechseln bzw. Schnitten passieren. Auch bei globalen Operatoren kann es zum Flackern kommen, wenn bei einer Videosequenz die Übertragungsfunktion nur pro Bild dynamisch angepasst wird und keine Berücksichtigung der Vorgängerbilder erfolgt.

BAILEY, D. G beschreibt in dem Artikel "Streamed high dynamic range imaging" (School of Engineering and Advanced Technology, Massey University, Palmerston North, New Zealand. In: International Conference on Field-Programmable Technology (FPT), 10-12 Dec. 2012. S. 305 - 308; IEEE. XP032309724), dass für die Intensität ein kumulatives Histogramm erstellt wird und die Standardabweichung innerhalb eines Fensters berechnet wird, wobei ein Clipping für bestimmte Helligkeitswerte durchgeführt wird.

US5724456A offenbart Helligkeitsanpassung von Bildern mittels digitaler Szenenanalyse. Ein System und Verfahren zur Verarbeitung eines digitalen Bildsignals wird dabei so gestaltet, dass die Luminanzwerte optimal auf die Tonwertreproduktionsfähigkeit einer Zielanwendung abgebildet werden.

**Aufgabe**

Hiervon ausgehend liegt der Erfindung die Aufgabe zugrunde, ein Verfahren bereit zu stellen, welches den wiedergegebenen Dynamikumfang der Aufnahme erhöht und die Anzahl von sichtbaren Bildfehlern verringert.

**Lösung der Aufgabe**

Gelöst wird diese Aufgabe durch ein Verfahren mit den Merkmalen des Anspruchs 1. Vorteilhafte Ausführungsformen und Weiterbildungen der vorliegenden Erfindung ergeben sich aus den Unteransprüchen.

Im erfindungsgemäßen Verfahren erfolgt in einem zusätzlichen Bearbeitungsschritt vor dem Tone Mapping eine Verringerung des Kontrastes und der Dynamik eines Ausgabebildes in Abhängigkeit von der Helligkeitsverteilung des Ursprungs-Bildes ("dynamisches Clipping",) als Anpassung an den Dynamikumfang des Ausgabesystems. Dies geschieht durch die Anwendung eines Auswahlbereiches, welcher zu einer Verteilungsfunktion führt. Damit werden bestimmte nicht benötigte Kontrastbereiche entfernt. Die Position und Form der Verteilungsfunktion stellt eine Blendeneinstellung dar.

Vor der Durchführung des Verfahrens wird vorzugsweise der Dynamikumfang des Ausgabesystems bestimmt, indem zumindest $L_{dmax}$ als maximale Helligkeit (im Sinne von Luminanz) des Ausgabesystems gemessen wird. Ein üblicher Wert für $L_{dmax}$ Standard bei Dynamic Range (SDR) Bildern beträgt 100 cd/m². Häufig ist die maximale Helligkeit des Ausgabesystems auch schon bekannt und lässt sich aus dessen technischen Spezifikationen entnehmen (z.B. bei Displays). In diesem Fall kann dieser Wert direkt als Parameter im erfindungsgemäßen Verfahren verwendet werden. Vorteilhafterweise wird zusätzlich die minimale Helligkeit des Ausgabesystems $L_{dmin}$ gemessen. Dieser Wert liegt üblicherweise bei 0,05 bis 1 cd/m². Alternativ wird von einer festen minimalen Helligkeit $L_{dmin}$ von beispielsweise 0,1 cd/m² ausgegangen, was für viele Anwendungen eine ausreichende Näherung darstellt. Andere Werte von $L_{dmin}$ von 0,01 cd/m² bis 1 cd/m² sind möglich.

Im ersten Schritt des Verfahrens werden zunächst die Helligkeitswerte für jeden Bildpunkt des Ursprungs-Bildes erfasst. Die resultierende Helligkeitsverteilung gibt an wie viele Bildpunkte jeweils eine bestimmte Helligkeit aufweisen. Üblicherweise wird aber mit einer Intensitätsverteilung gerechnet. Deshalb werden die Helligkeitswerte anschließend in Intensitätswerte umgerechnet. Die Intensität I ist dabei ein Maß für die wahrgenommene Helligkeit. Da der Helligkeitseindruck nicht linear von der der tatsächlichen Helligkeit abhängt, wird die tatsächliche Helligkeit (Luminanz) logarithmisch gewichtet und in einen Wertebereich skaliert. Dabei gilt: $I(L) = \log_{10}(L) + k_3$. Dabei dient $k_3$ dazu, dass es für kleine Luminanzwerte zu keinen negativen Intensitätswerten kommt. $k_3$ bewegt sich üblicherweise in einem Bereich zwischen 3 und 7.

Anschließend wird eine Bildstatistik über die Intensitätswerte der Bildpunkte des Ursprungs-Bildes erstellt. Dazu wird ermittelt welchem Anteil der Bildpunkte welcher Intensitätswert zugeordnet werden kann. Der Intensitätsbereich, welcher dabei abgedeckt werden soll, wird bevorzugt vorher fest gewählt. Für die untere Grenze ist zum Beispiel der Wert $I(L)=0$ geeignet und für die obere Grenze $I(L)>I(L_{wmax})$. Das Ursprungs-Bild ist das Bild so wie es von einer Kamera ursprünglich aufgenommen wurde. Lwmin ist dabei die minimale Helligkeit des Ursprungs-Bildes und Lwmax das Maximum.

Als nächstes werden die Intensitätswerte diskretisiert, das heißt der gewählte Intensitätsbereich wird in k Abschnitte unterteilt und jeder Bildpunkt in einen Intensitätsbereich eingeordnet, i bezeichnet einen konkreten Abschnitt auf dem Intensitätshistogramm. Diese Auftragung der Anzahl der Bildpunkte je Intensitätsbereich wird auch als Intensitätshistogramm bezeichnet. Sinnvoll ist beispielsweise eine Unterteilung in $2^{16}$ Abschnitte, welches 16Bit entspricht. Andere Unterteilungen sind z.B. $2^8$ oder $2^{24}$ oder $2^{32}$ Abschnitte.

Dann werden die Breite B und die mittlere Position $\mu$ des Auswahlbereichs der Intensitätswerte, welche zur Berechnung der Verteilungsfunktion g(i) dienen, innerhalb des Intensitätshistogramms festgelegt.

Der Auswahlbereich ist der Bereich der Helligkeitsverteilung des Ursprungsbildes, welcher als besonders wichtig für den Zuschauer erachtet wird und welchen es deshalb immer zu erhalten gilt. Hierbei beschreibt B die Breite des Auswahlbereiches. Sie gibt an, wie viele Intensitätsbereiche aller Intensitätsbereiche der Auswahlbereich umfasst. Dieser Auswahlbereich wird auch als Kontrastkasten bezeichnet. Der niedrigste Intensitätswert des Ursprungs-Bildes, welcher noch im Kontrastkasten liegt wird als $g_l$ bezeichnet. Der größte Intensitätswert des Ursprungs-Bildes, welcher noch im Kontrastkasten liegt wird als $g_r$ bezeichnet.

Die Breite dieses Auswahlbereiches wird anhand der maximalen Luminanz des Ausgabesystems, das heißt $L_{dmax}$, festgelegt. Weiterhin wird für die untere Grenze entweder eine gemessene minimale Helligkeit $L_{min}$ oder eine feste minimale Helligkeit $L_{dmin}$ genutzt.

Vorzugsweise wird in Abhängigkeit von der maximalen Helligkeit des Ausgabesystems $L_{dmax}$ die Breite des Auswahlbereiches B über die Beziehung B= $k_1$+$k_2$ * log ($L_{dmax}$/$L_{dmin}$) bestimmt. Dabei sind $k_1$ und $k_2$ Skalierungsfaktoren, die vom Grad der Unterteilung der Intensitätswerte (Anzahl der Intensitätsabschnitte) zu wählen sind. Üblicherweise bewegt sich $k_1$ zwischen 4000 und 4400 und $k_2$ zwischen 100 und 200, bei einer Unterteilung in $2^{16}$ Abschnitte. Bei weniger Abschnitten fallen $k_1$ und $k_2$ entsprechend kleiner aus. Der Auswahlbereich deckt so etwa 7 bis 10% aller Intensitätswerte ab, wodurch (auch abhängig von der Bildvorlage,) 8 bis 14 Blendenstufen der Bildvorlage wiedergegeben werden können. Um diesen Zieldynamikumfang zu erreichen, wurden die Richtwerte der weiteren Parameter empirisch ermittelt und an den betreffenden Stellen angeführt.

Der Dynamikumfang des Auswahlbereiches steht somit im Zusammenhang mit dem Dynamikumfang des Ausgabesystems.

Die Position des Kontrastkastens wird dann bezogen auf das Intensitätshistogramm des Ursprungs-Bildes so gewählt, dass sich der größtmögliche Anteil aller Intensitätswerte (sprich somit auch aller Bildpunkte) in diesem Bereich befindet. Dies geschieht beispielsweise durch das Ermitteln der größten Steigung auf dem kumulativen Histogramm der Intensitätswerte der einzelnen Bildpunkte. Das kumulative Histogramm der Intensitätswerte lässt sich durch $H(i) = \sum_{k=1}^{i} h_k$ darstellen. Hierbei ist H(i) die Anwahl der Bildpunkte der ersten i Intensitätsabschnitte. Bei 16Bit gibt es beispielsweise 65536 Abschnitte.

Die Anzahl h der Bildpunkte auf der Breite B ist dann maximal, wenn H(i+B) - H(i) maximal ist. Dieser Abschnitt wird mit i' bezeichnet.

$$g_l = I(i')$$

Diese Operation liefert die untere Grenze des Auswahlbereiches ($g_l$). Hieraus kann man beispielsweise anhand folgender Formeln auf die Position sowie auf die obere Grenze des Auswahlbereiches schließen.

Die mittlere Position des Auswahlbereiches $\mu$ ergibt sich aus $\mu$ = gi + ½ . B

Die obere Grenze gr als gr = gi + B. Mithilfe von $g_l$ und $g_r$ lässt sich die Höhe Ha des Auswahlbereiches bestimmen. $H_a$ ergibt sich durch die Anzahl der Intensitätswerte in diesem Auswahlbereich geteilt durch seine Breite.

Hierfür kann beispielsweise folgende Gleichung verwendet werden.

$$H_a = \sum_{i'}^{i-B} h_k/B$$

Analog kann natürlich auch zuerst $g_r$ bestimmt

werden. In diesem Fall ist H(i) - H(i-B) maximal. Dieser Abschnitt wird mit i" bezeichnet.

$$g_r = I(i'')$$

Die Standardabweichung $\sigma$ des aktuellen Bildes als Maß für die Breite der Verteilungsfunktion ergibt sich beispielsweise aus folgender Relation

$$\sigma = (H_{av} / H_a)^2 \cdot H_{av} \cdot k_5$$

$H_{av}$ beschreibt dabei einen Parameter für eine mittlere Höhe des Auswahlbereiches. Der Richtwert für FullHD liegt hier zwischen 220 und 270.

Anschließend wird unter Verwendung des Auswahlbereiches eine virtuelle Blende durchgeführt. Dazu wird eine Verteilungsfunktion verwendet. Für die Verteilungsfunktion g(i) der Intensitätswerte wird angenommen, dass diese normalverteilt vorliegen, somit ist dafür eine Gaußverteilung am geeignetsten. Andere Verteilungsfunktionen z.B. Poisson-Verteilung, Cauchy-Lorentz-Verteilung oder Lorentz-Verteilung sind möglich. Somit folgt:

$$g(i) = k_4 / \sqrt{(2\pi * \sigma^2)} \cdot e^{(-(i-\mu)^2 / 2 \cdot \sigma^2)}$$

$\mu$ und $\sigma$ sind bereits vorher berechnet worden. $k_4$ ein Skalierungsfaktor für die Höhe der Verteilungsfunktion. Üblicherweise liegt $k_4$ zwischen 2.000.000 und 3.000.000. $k_5$ ist ein Skalierungsfaktor für die Stauchung der Verteilungsfunktion. Üblicherweise liegt er zwischen 9 und 11. Mit der nun aufgestellten Gewichtungsfunktion g(i) wird das Intensitätshistogramm des Ursprungs-Bildes h(i) gewichtet.

Eine geeignete Gewichtung ist *f(i) = h(i) · g(i)*

Für das Ergebnis der Gewichtung werden Häufigkeitsschwellenwerte $s_1$ und $s_2$ festgelegt.

si ist dabei der Häufigkeitsschwellwert für das Clipping der niedrigen Helligkeitswerte d.h. der Schatten. Je größer der Wert, desto mehr wird in den dunklen Bereichen begrenzt. Durch den Schwellwert ergibt sich in der späteren Berechnung eine Position auf der Intensitäts-Achse. Diese Position kann wiederrum in einen Intensitätswert, den Intensitätswert des Clippings $I_{min}$, umgerechnet werden. $_{S2}$ ist der Häufigkeitsschwellwert für das Clipping der großen Helligkeitswerte d.h. der Lichter. Je größer der Wert, desto mehr wird in den hellen Bereichen begrenzt. Durch den Schwellwert ergibt sich in der späteren Berechnung eine Position auf der Intensitäts-Achse. Diese Position kann wiederrum in einen Intensitätswert, den Intensitätswert des Clippings $I_{max}$, umgerechnet werden. Es ist auch möglich nur einen Schwellwert zu verwenden und ein Clipping nur einseitig durchzuführen.

Aus dem Abschnitt $i_{min}$ mit der kleinsten Intensität, für den gilt $f(i_{min}) > s_1$ ergibt sich $I_{min}$ als $I_{min} = I(i_{min})$. Invertiert man die logarithmische Verzerrung erhält man den Luminanzwert $L_{min}$ des Clippings. Analog folgt aus dem Abschnitt imax mit der größten Intensität, für den gilt $f(i_{max}) > s_2$, $I_{max}$ als $I_{max} = I(i_{max})$. Invertiert man die logarithmische Verzerrung erhält man den Luminanzwert des Clippings. Dieser Verzieht auf gewisse Helligkeitsinformationen in Abhängigkeit von der Helligkeitsverteilung ("Clipping") ermöglicht größere Kontrastunterschiede im Rest des Bildes. Das funktioniert also wie eine klassische Blende. Allerdings ist der Dynamikumfang nicht fixiert, sondern verhält sich adaptiv anhand Ausgabesystem und der Helligkeitsverteilung in der realen Szene. Darüber hinaus ist das System nicht den diskreten Schritten einer mechanischen Blende unterworfen, sondern kann viel feiner geregelt werden.

In einer zweiten Ausführungsform wird das Verfahren für eine Sequenz von Bildern, für jedes einzelne Bild separat durchgeführt. Diese Anpassung an die aktuelle Helligkeitsverteilung ("dynamisches Clipping") ermöglicht eine bessere Anpassung an wechselnde Lichtverhältnisse.

In einer dritten Ausführungsform werden die Werte $\mu_2$ und vorzugsweise auch $\sigma_2$ eines späteren zweiten Bildes unter Verwendung eines Wertes einer mittleren Position $\mu_1$ und vorzugsweise eines Wertes einer Standardabweichung $\sigma_1$ wenigstens eines früheren ersten Bildes zeitlich geglättet. Die Glättungsfunktionen lauten dabei

$$\mu_{g2} = \mu_1 * z_\mu + \mu_2 * (1-z_\mu)$$

beziehungsweise

$$\sigma_{g2} = \sigma_1 * z_\sigma + \sigma_2 * (1-z_\sigma)$$

$\mu_{g2}$ ist dabei (zeitlich) geglättete Position des Kontrastkastens und
$\sigma_{g2}$ ist dabei die (zeitlich) geglättete Standardabweichung der Verteilungsfunktion. $z_\mu$ und $z_\sigma$ sind Glättungskonstanten und beschreiben den Einfluss der Helligkeitsverteilung vorheriger Bilder auf das aktuelle Bild. Ein Wert von 0 bedeutet, dass der Auswahlbereich eines Bildes überhaupt nicht durch vorige Bilder beeinflusst wird. Ein Wert von 1 bedeutet, dass der Auswahlbereich fixiert ist und nicht durch die Helligkeitsverteilung des aktuellen Bildes beeinflusst wird. Übliche Werte für $z_\mu$ und $z_\sigma$ liegen zwischen 0,90 und 0,99 bevorzugt zwischen 0,94 und 0,96. Diese Werte sind unabhängig voneinander wählbar.

Die Werte $\mu_1$ bzw. $\sigma_1$ können hierbei ihrerseits bereits geglättete Werte sein.

Das erfindungsgemäße Verfahren zur Blendeneinstellung umfasst in einer vierten Ausführungsform auch Verfahrensschritte zur Erkennung von Szenenwechseln.

Hierzu wird nach Durchführung des erfindungsgemäßen Verfahrens die Position des Auswahlbereiches des aktuellen zweiten Bildes ($\mu_2$) mit der Position des Kontrastkastens des vorhergehenden ersten Bildes, ($\mu_1$) verglichen. Wenn diese sich um maximal einen Faktor $S_\mu$ unterscheiden liegt kein Szenenwechsel vor und es erfolgt eine Glättung wie in der dritten Ausführungsform des erfindungsgemäßen Verfahrens.

$$\left| \frac{\mu_2 - \mu_1}{\mu_1} \right| \leq S_\mu$$

Wenn jedoch die Bedingung $\left| \frac{\mu_2 - \mu_1}{\mu_1} \right| > S_\mu$ erfüllt ist d.h. die Abweichung größer ist, liegt ein Szenenwechsel vor und es erfolgt keine Glättung Innerhalb dieser Ausführungsform kann in einer Ausführungsvariante auch die Standardabweichung für die Erkennung eines Szenenwechsels berücksichtig werden. Hier gilt für die Standardabweichung der Helligkeitsverteilungen beider Bilder $\sigma_1$ und $\sigma_2$ die zusätzliche

Bedingung. $\left| \frac{\sigma_2 - \sigma_1}{\sigma_1} \right| \leq S_\sigma$ damit eine Glättung

erfolgt.

Wenn jedoch die Bedingung $\left| \frac{\mu_2 - \mu_1}{\mu_1} \right| > S_\mu$ oder die Bedingung

$\left| \frac{\sigma_2 - \sigma_1}{\sigma_1} \right| < S_\sigma$ erfüllt ist d.h. die Abweichung größer ist, liegt ein Szenenwechsel vor und es erfolgt keine Glättung.

Das verbessert den subjektiven Bildeindruck, da der wiedergegebene Dynamikumfang erhöht wird. Weiterhin kommt es zu einer Verringerung von sichtbaren Bildfehlern. Das typische Flackern wird so verhindert.

Das wichstigsten Einsatzfeld des Verfahrens ist die Umwandlung des HDR-Kamerasignals in ein SDR-Signal, bei wechselnden Lichtverhältnissen. Dies spielt insbesondere bei Live-Übertragungen eine große Rolle. (z.B. von Sportveranstaltungen)

Die Anpassung an die Lichtverhältnisse welche früher von einem Bildingenieur manuell im Übertragungswagen vorgenommen wurde, kann durch das erfindungsgemäße Verfahren automatisch mit einer Umwandlungssoftware erfolgen. Dies kann in der Kamera passieren, es ist aber auch denkbar, dass die Anpassung erst im Display oder dazwischen (z.B. Übertragungswagen) erfolgt.

Erläuterungen zu den Abbildungen

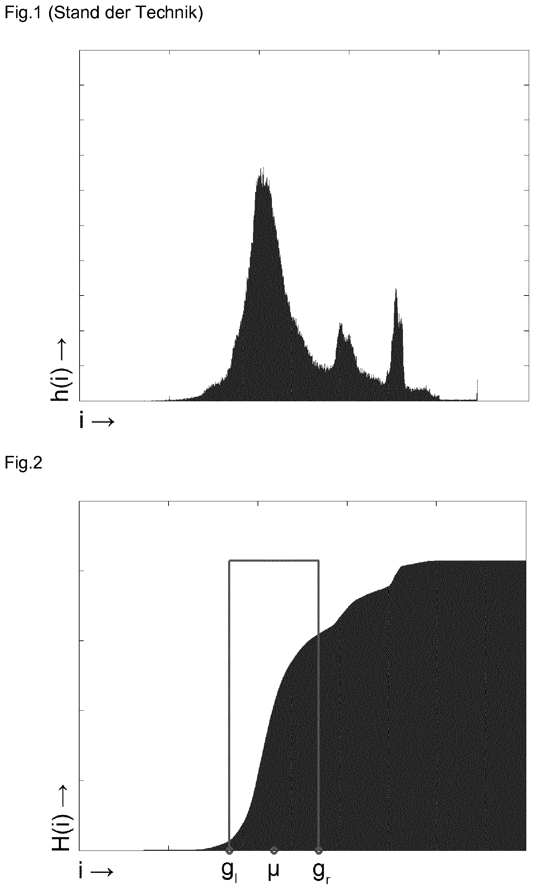

Fig. 1 zeigt das Intensitätshistogramm der Bildpunkte des Ursprungsbildes.

Fig. 2 zeigt das kumulierte Intensitätshistogramm der Bildpunkte des Ursprungs-Bildes. Dazu werden die Intensitätswerte bis zum jeweiligen Intensitätswert aufsummiert. Dabei wurde die Intensitätswerte für die Schwellwerte gi und gr bestimmt und somit die mittlere Position $\mu$ des Auswahlbereiches bestimmt.

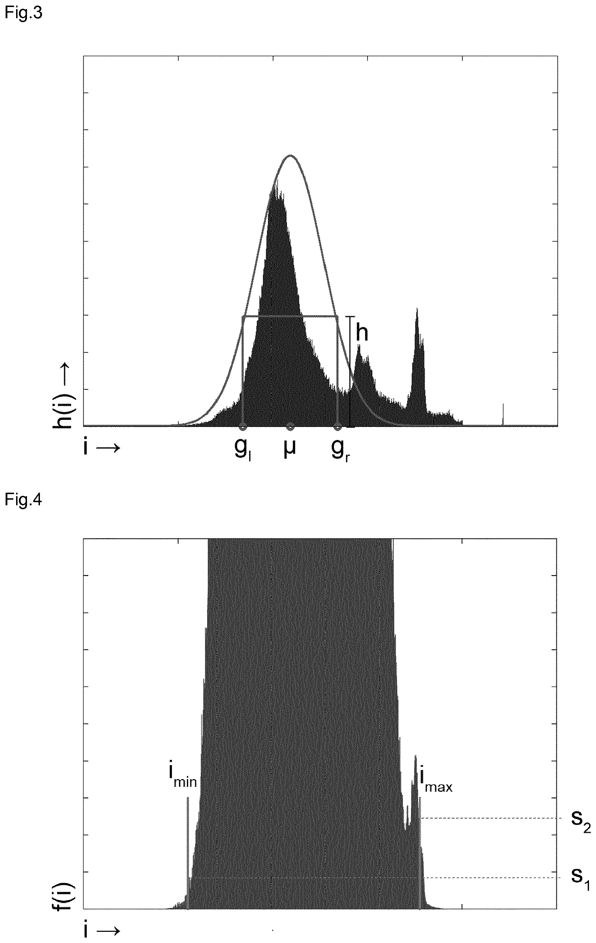

Fig. 3 zeigt das Intensitätshistogramm der Bildpunkte. Aus der mittleren Position $\mu$ des Auswahlbereiches und der Standardabweichung $\sigma$ wird eine angenäherte Verteilungsfunktion g(i) bestimmt.

Fig. 4 zeigt die Funktion f(i), welche die Gewichtung des Intensitätshistogramms mit der angenäherten Verteilungsfunktion wiederspiegelt. Es kommt zu einer Überhöhung in der Mitte der Intensitätsverteilung. $I_{min}$ und $I_{min}$ ergeben sich durch den Abgleich der Funktion f(i) mit den Schwellwerten $s_1$ bzw. $s_2$.

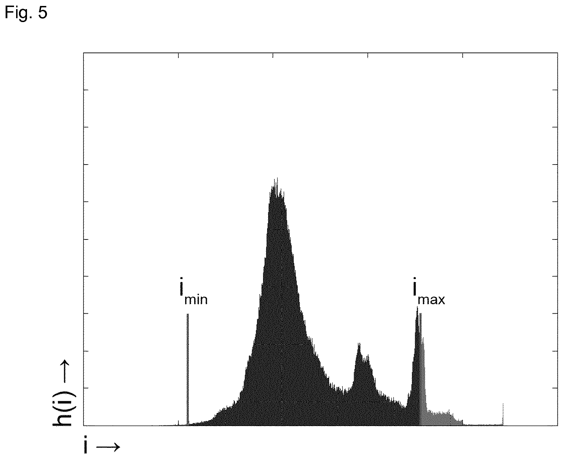

Fig. 5 zeigt das Intensitätshistogramm des Ausgabebildes. Die Bildpunkte des Ursprungsbildes (hellgrau) mit einer Intensität die kleiner als $I_{min}$, wurden auf $I_{min}$ aufgehellt. Die Bildpunkte des Ursprungsbildes mit einer Intensität die größer als $I_{max}$, wurden auf $I_{max}$ abgedunkelt.

**Patentansprüche**

1.  Verfahren zur Blendeneinstellung zur Umwandlung wenigstens eines Ursprungs-Bildes in ein Ausgabebild, umfassend folgende Schritte:

    I. Erfassen von Helligkeitswerten L für jeden Bildpunkt des Ursprungs-Bildes,
    II. Umrechnen der Helligkeitswerte L in Intensitätswerte I, wobei Intensität dabei ein Maß für wahrgenommene Helligkeit ist,
    III. Bestimmung eines Intensitätshistogramms h(i) des Ursprungs-Bildes,
    IV. Festlegen einer Breite B und Bestimmung einer mittleren Position $\mu$ eines Auswahlbereiches innerhalb einer Intensitätshistogramm h(i) der Intensitätswerte I aus einer minimalen Helligkeit (Ldmin oder Lmin) und der maximalen Helligkeit (Ldmax) eines Ausgabesystems, wobei die minimale Helligkeit eine feste Helligkeit oder die minimale Helligkeit des Ausgabesystems ist, so dass sich eine maximale Anzahl an Intensitätswerten innerhalb des Auswahlbereiches befindet, sowie die Bestimmung einer

Standardabweichung $\sigma$.
    V. Aufstellen einer Verteilungsfunktion g(i) innerhalb des Intensitätshistogramms h(i), wobei die Verteilungsfunktion durch die mittlere Position $\mu$ und die Standardabweichung $\sigma$ des Auswahlbereiches geformt wird,
    VI. Gewichten des Intensitätshistograms h(i) mit der Verteilungsfunktion g(i) wobei die gewichtete Funktion f(i) = h(i) · g(i) ist,
    VII. Vergleich der gewichteten Funktion f(i) mit wenigstens einem Häufigkeitsschwellwert $s_1$ oder $s_2$ des Intensitätshistogramms h(i) zur Ermittlung wenigstens eines Grenzwertes $i_{min}$ oder $i_{max}$ für ein durchzuführendes Clipping,
    VIII. Umwandlung des Ursprungs-Bildes in ein Ausgabebild unter Verwendung wenigstens eines der zuvor ermittelten Grenzwerte $i_{min}$ oder $i_{max}$, wobei die Bildpunkte außerhalb dieser Grenzwerte mit einer Helligkeit des oberen oder unteren Grenzwertes $i_{min}$, $i_{max}$ dargestellt werden.

2.  Verfahren zur Blendeneinstellung gemäß Anspruch 1, **dadurch gekennzeichnet, dass** das Verfahren bei einer Sequenz von Bildern für jedes einzelne Bild separat durchgeführt wird.

3.  Verfahren zur Blendeneinstellung gemäß Anspruch 1, **dadurch gekennzeichnet, dass** ein Wert einer mittleren Position $\mu_2$ eines späteren zweiten Bildes unter Verwendung eines Wertes einer mittleren Position $\mu_1$ wenigstens eines früheren ersten Bildes zeitlich geglättet wird.

4.  Verfahren zur Blendeneinstellung gemäß Anspruch 3, **dadurch gekennzeichnet, dass** zusätzlich ein Wert einer Standardabweichung $\sigma_2$ eines späteren zweiten Bildes unter Verwendung von Werten von Standardabweichungen $\sigma_1$ wenigstens eines früheren ersten Bildes zeitlich geglättet wird.

5.  Verfahren zur Blendeneinstellung gemäß Anspruch 3 oder 4 **dadurch gekennzeichnet, dass** es einen Verfahrensschritt zur Erkennung von Szenenwechseln umfasst, wobei nach Durchführung der Verfahrensschritte I bis IV die Positionen der mittleren Helligkeiten $\mu_1$ und $\mu_2$ von Auswahlbereichen jeweils zweier aufeinander folgender Bilder verglichen werden, wobei nur dann, wenn für einen Faktor

$$S_\mu \left| \frac{\mu_2 - \mu_1}{\mu_1} \right| \leq S_\mu$$ gilt, eine zeitliche Glättung erfolgt.

6.  Verfahren zur Blendeneinstellung gemäß Ansprüchen 3 und 4, **dadurch gekennzeichnet, dass** zusätzlich die Standardabweichungen $\sigma_1$ und $\sigma_2$ je-

weils zweier aufeinander folgenden Bilder verglichen werden, wobei nur dann, wenn die Bedingungen

$$\left|\frac{\mu_2-\mu_1}{\mu_1}\right| \leq S_\mu \quad \text{und}$$

$$\left|\frac{\sigma_2-\sigma_1}{\sigma_1}\right| \leq S_\sigma, \text{ als zusätzliche Bedingung,}$$

gelten, eine zeitliche Glättung erfolgt.

**Claims**

1. Method of aperture adjustment for converting at least one source image into an output image, comprising the steps of:

    I. Detecting brightness values L for each pixel of the original image,
    II. Conversion of the brightness values L into intensity values I, where intensity is a measure of perceived brightness,
    III. Determination of an intensity histogram h(i) of the original image,
    IV. Specifying a width B and determining a middle position $\mu$ of a selection range within an intensity histogram h(i) of the intensity values I from the minimum brightness (Ldmin or Lmin) and the maximum brightness (Ldmax), wherein the minimum brightness is a fixed brightness or the minimum brightness of the output system so that a maximum number of intensity values are within the selection range, and determining a standard deviation $\sigma$.
    V. Establishing a distribution function g(i) within the intensity histogram h(i), wherein the distribution function is formed by the middle position $\mu$ and the standard deviation $\sigma$ of the selection range,
    VI. Weighting the intensity histogram h(i) with the distribution function g(i) where the weighted function f(i) = h(i) · g(i)
    VII. comparison of the weighted function f(i) with at least one frequency threshold value s1 or s2 of the intensity histogram h(i) to determine at least one limit value imin or imax for a clipping to be performed,
    VIII. Conversion of the original image into an output image using at least one of the previously determined limit values imin or imax, whereby the pixels outside these limits are displayed with a brightness of the upper or lower limit value imin, imax.

2. Method of aperture adjustment according to claim 1, **characterized in that**, in the case of a sequence of images, the method is carried out separately for each individual image.

3. Method for aperture adjustment according to claim 1, **characterized in that** a value of a middle position $\mu2$ of a later second image is temporally smoothed using a value of a middle position $\mu1$ of at least one earlier first image.

4. Method of aperture adjustment according to claim 3, **characterized in that** in addition a value of a standard deviation $\sigma2$ of a later second image is smoothed in time using values of standard deviations $\sigma1$ of at least one earlier first image.

5. Method of aperture adjustment according to claim 3 or 4, **characterized in that** it comprises a method step for detecting scene changes, wherein after carrying out method steps I to IV the positions of the average brightnesses $\mu1$ and $\mu2$ of selection areas of two successive images are compared, wherein temporal smoothing is carried out only if

$$\left|\frac{\mu_2-\mu_1}{\mu_1}\right| \leq S_\mu \text{ applies to a factor } S_\mu.$$

6. Method of aperture adjustment according to claims 3 and 4, **characterized in that** in addition the standard deviations $\sigma1$ and $\sigma2$ of two consecutive images are compared, with temporal smoothing only taking place if the conditions $\left|\frac{\mu_2-\mu_1}{\mu_1}\right| \leq S_\mu$ and

$$\left|\frac{\sigma_2-\sigma_1}{\sigma_1}\right| \leq S_\sigma \text{ apply as additional condition.}$$

**Revendications**

1. Procédé d'ajustement d'ouverture pour convertir au moins une image source en une image de sortie, comprenant les étapes suivantes

    I. Détection les valeurs de luminosité L pour chaque pixel de l'image originale,
    II. Conversion des valeurs de luminosité L en valeurs d'intensité I, où l'intensité est une mesure de la luminosité perçue,
    III. Détermination d'un histogramme d'intensité h(i) de l'image originale,
    IV. Spécifier une largeur B et déterminer une position centrale $\mu$ d'une plage de sélection dans un histogramme d'intensité h(i) des valeurs d'intensité I à partir de la luminosité minimale (Ldmin ou Lmin) et de la luminosité maximale (Ldmax), la luminosité minimale étant une luminosité fixe ou la luminosité minimale du système de sortie de sorte qu'un nombre maximal de valeurs d'intensité se trouvent dans la plage de sélection, et déterminer un écart type $\sigma$.

V. Établissement d'une fonction de distribution g(i) dans l'histogramme d'intensité h(i), où la fonction de distribution est formée par la position centrale $\mu$ et l'écart-type $\sigma$ de la plage de sélection,

VI. Pondération de l'histogramme d'intensité h(i) avec la fonction de distribution g(i) où la fonction pondérée f(i) = h(i) · g(i)

VII. Comparaison de la fonction pondérée f(i) avec au moins une valeur seuil de fréquence s1 ou s2 de l'histogramme d'intensité h(i) pour déterminer au moins une valeur limite imin ou imax pour un écrêtage à effectuer,

VIII. Conversion de l'image originale en une image de sortie en utilisant au moins une des valeurs limites précédemment déterminées imin ou imax, les pixels situés en dehors de ces limites étant affichés avec une luminosité de la valeur limite supérieure ou inférieure imin, imax.

2. Procédé de réglage d'ouverture selon la revendication 1, **caractérisé en ce que**, dans le cas d'une séquence d'images, le procédé est réalisé séparément pour chaque image individuelle.

3. Procédé de réglage d'ouverture selon la revendication 1, **caractérisé en ce qu'**une valeur d'une position centrale $\mu2$ d'une deuxième image ultérieure est lissée dans le temps en utilisant une valeur d'une position centrale $\mu1$ d'au moins une première image antérieure.

4. Procédé de réglage d'ouverture selon la revendication 3, **caractérisé en ce qu'**en outre une valeur d'un écart type $\sigma2$ d'une deuxième image ultérieure est lissée dans le temps en utilisant des valeurs d'écarts types $\sigma1$ d'au moins une première image antérieure.

5. Procédé de réglage d'ouverture selon la revendication 3 ou 4, **caractérisé en ce qu'**il comprend une étape de procédé pour la détection de changements de scène, dans laquelle, après l'exécution des étapes de procédé I à IV, les positions des luminosités moyennes $\mu1$ et $\mu2$ des zones de sélection de deux images successives sont comparées, un lissage temporel n'étant effectué que

$$\left| \frac{\mu_2 - \mu_1}{\mu_1} \right| \leq S\mu \text{ s'applique à un facteur } S\mu.$$

6. Méthode d'ajustement de l'ouverture selon les revendications 3 et 4, **caractérisée en ce qu'**en outre les écarts types $\sigma1$ et $\sigma2$ de deux images consécutives sont comparés, le lissage temporel n'ayant lieu que si les conditions $\left| \dfrac{\mu_2 - \mu_1}{\mu_1} \right| \leq S\mu$ et

$$\left| \frac{\sigma_2 - \sigma_1}{\sigma_1} \right| \leq S\sigma \text{ s'appliquent comme condition supplémentaire.}$$

Fig.1 (Stand der Technik)

Fig.2

Fig.3

Fig.4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5724456 A

**In der Beschreibung aufgeführte Nicht-Patentliteratur**

- Streamed high dynamic range imaging'' (School of Engineering and Advanced Technology. **BAILEY, D. G.** International Conference on Field-Programmable Technology (FPT). IEEE, 10. Dezember 2012, 305-308